# FASCICULE DE BREVET EUROPEEN

(11) **EP 0 636 825 B1**
(45) Date de publication et mention de la délivrance du brevet: **02.04.1997**
(21) Numéro de dépôt: 94201724.5
(22) Date de dépôt: 16.06.1994
(51) Int. Cl.: F16L 5/10, F02M 25/07

(54) **Système de raccordement d'un tuyau véhiculant un fluide chaud à un organe en matière plastique et son utilisation dans un moteur à combustion interne**
Rohrverbindungssystem zum Transportieren eines heissen Fluids zu einem Plastikteil und seine Verwendung in einer Brennkraftmaschine
Pipe connection system conveying a hot fluid to a plastic member and its use in an internal combustion engine

(30) Priorité: 25.06.1993 FR 9307884
(43) Date de publication de la demande: 01.02.1995
(73) Titulaire: SOLVAY (Société Anonyme), B-1050 Bruxelles (BE)
(72) Inventeur: Vansnick, Michel, B-1810 Wemmel (BE)
(74) Mandataire: Dufrasne, Eugène

(56) Documents cités:
- WO-A-90/15240
- BE-A- 637 028
- DE-U- 9 002 341
- FR-A- 2 693 252
- US-A- 4 331 338

## Description

La présente invention concerne un système de raccordement d'un tuyau véhiculant un fluide chaud à un organe en matière plastique contenant ou véhiculant un fluide de température sensiblement inférieure. Elle concerne aussi l'utilisation d'un tel système dans un moteur à combustion interne.

Dans de nombreuses applications industrielles, il est nécessaire d'injecter un fluide chaud dans un fluide de température sensiblement inférieure véhiculé par un organe en matière plastique. Une telle situation pose un problème sur le plan de la résistance thermique dudit organe à l'endroit où le tuyau véhiculant le fluide chaud s'y raccorde.

Un problème de ce type se rencontre notamment lors de la conception de moteurs à combustion interne permettant une réduction de la quantité de gaz d'échappement polluants émis. Dans cette perspective, une solution consiste en effet à soumettre une partie des gaz d'échappement à une recirculation dans la ou les chambres de combustion du moteur, ce qui permet de parfaire leur combustion et d'ainsi réduire la quantité de polluants émis.

Pour mettre en oeuvre cette solution, il faut équiper le moteur d'un tuyau ramenant une partie des gaz d'échappement vers le collecteur d'admission. Vu la température élevée des gaz d'échappement, habituellement de l'ordre de plusieurs centaines de degrés, un tuyau métallique (généralement désigné par "tuyau EGR" - Exhaust Gas Recirculation) est souvent utilisé à cette fin. Par contre, les collecteurs d'admission des moteurs à explosion ne sont pas soumis à des températures élevées, et sont de plus en plus fréquemment réalisés en matière plastique.

Il est toutefois évident que des problèmes se posent lorsqu'on désire raccorder un tuyau EGR, porté à plusieurs centaines de degrés, à un organe en matière plastique. Une partie de solution à ce problème, déjà connue, consiste à réaliser le raccordement par l'intermédiaire d'une cloche métallique, à travers laquelle passe le tuyau, jouant un rôle de bouclier thermique entre le tuyau EGR où circulent les gaz chauds et la paroi du collecteur en matière plastique, à l'endroit où le tuyau pénètre dans le collecteur.

Il faut cependant raccorder fermement et de manière étanche le tuyau EGR au collecteur d'admission.

Un système de raccordement connu consiste à fixer la cloche mentionnée ci-dessus par l'intermédiaire d'inserts métalliques filetés noyés dans l'épaisseur de la paroi du collecteur, au moyen de vis traversant des oeillets latéraux fixés à la cloche ou en faisant partie. Ce système constitue toutefois une solution peu avantageuse. En effet, il comporte de nombreuses pièces, son (dé)montage implique plusieurs opérations (autant que de vis) et nécessite l'utilisation d'un outil. La présence d'inserts métalliques au sein du collecteur complique en outre sa fabrication et son éventuel recyclage ultérieur.

Le système de raccordement choisi doit dès lors répondre à de nombreuses exigences. Ainsi, il doit notamment garantir l'étanchéité, même à des températures élevées, et être de préférence d'un (dé)montage simple, c'est-à-dire ne nécessitant aucun outil particulier ni l'application d'une force importante. Pour qu'il soit utilisable en particulier sur de petits moteurs, il convient en outre qu'il soit peu encombrant. Il est également intéressant qu'il puisse s'appliquer à des tuyaux cylindriques et également à des tuyaux de sections différentes. Généralement, on souhaite également pouvoir raccorder le tuyau à l'organe sans devoir lui imposer une rotation, cette rotation pouvant être rendue difficile en raison de la fixation rigide de l'autre extrémité du tuyau, ou en raison de coude(s) que peut comporter le tuyau. Il est finalement souhaitable que le système choisi se compose de peu de pièces, afin de simplifier sa mise en oeuvre et de réduire son coût.

Les mêmes exigences s'imposent généralement dans les applications industrielles autres que celle de la recirculation de gaz d'échappement de moteurs à combustion interne.

Un système selon la première partie de la revendication 1 et remplissant en partie ces conditions est connu du document FR-A-2 693 252.

La présente invention vise dès lors à fournir un système de raccordement étanche, simple, peu encombrant et facile de (dé)montage.

De manière plus précise, l'invention concerne un système de raccordement étanche d'un tuyau véhiculant un fluide chaud à un organe en matière plastique selon la revendication 1.

Le fait que l'étanchéité soit assurée de manière radiale est particulièrement avantageux, car un éventuel jeu axial, dû par exemple à la dilatation ou au fluage de certaines pièces ou parties de pièces du système, est sans influence sur son étanchéité. En outre, tout en excluant tout jeu, l'immobilisation axiale de la cloche est assurée de part et d'autre par un élément possédant une certaine élasticité (la ou les épingles d'un côté et le joint annulaire de l'autre), ce qui est avantageux sur le plan de l'atténuation des vibrations. Cet avantage est particulièrement appréciable dans le cas particulier du raccordement de tuyaux EGR, car ceux-ci sont non seulement soumis aux vibrations du moteur, mais de plus parcourus par un flux gazeux pulsé.

Les figures annexées représentent, de manière non limitative, différentes variantes de réalisation du système de raccordement de l'invention, et illustrent son fonctionnement et ses avantages.

Les figures 1a et 1b représentent une même variante de réalisation du système de raccordement de l'invention, l'une en coupe (fig. 1a) et l'autre vue axialement de l'extérieur de l'organe (fig. 1b).

La fig. 2 représente, en coupe, une autre variante de réalisation.

Les figures 3 et 4 représentent chacune, en perspective, un orifice (4) ménagé dans la paroi d'un organe (2), partiellement entouré extérieurement par une margelle (10).

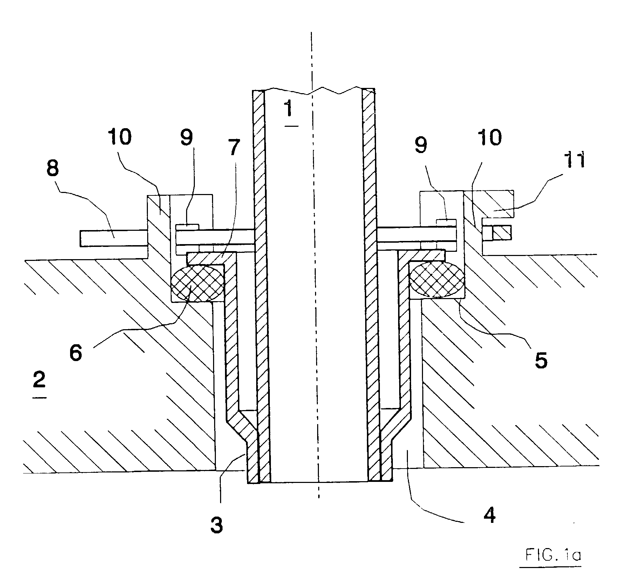

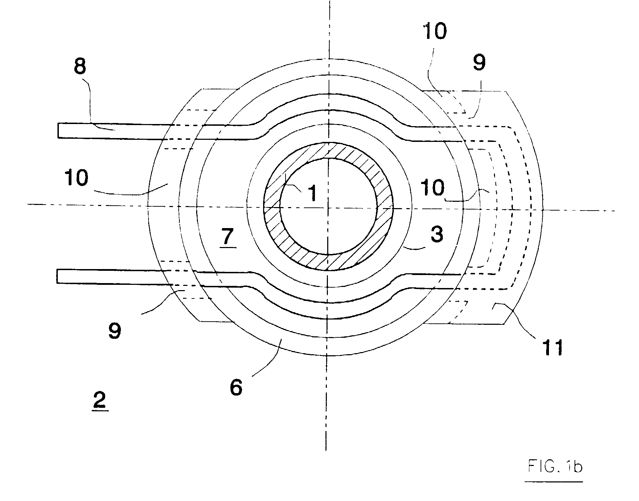

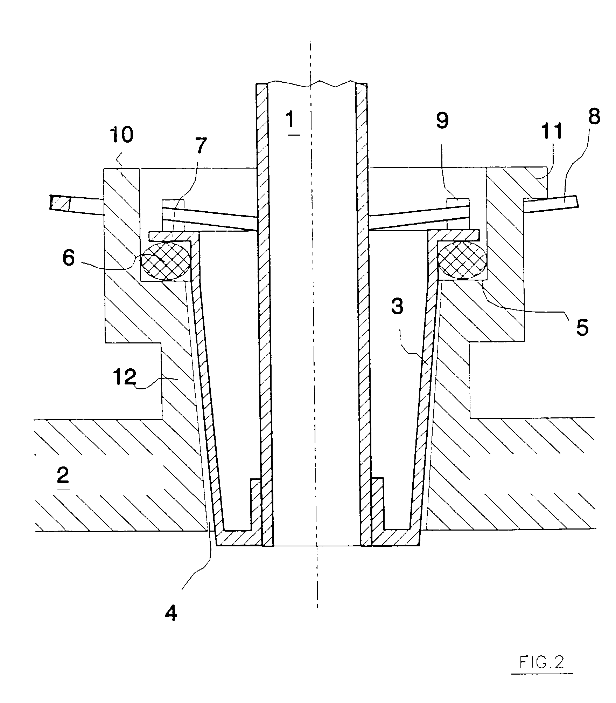

Sur les figures 1a, 1b et 2, on distingue essentiellement un tuyau (1) dont l'extrémité est munie d'une cloche (3), ainsi que la paroi d'un organe (2) en matière plastique, dont l'intérieur est supposé être situé vers le bas et dans lequel est pratiqué un orifice (4).

Les matériaux constitutifs du tuyau (1) et de sa cloche (3) peuvent être quelconques. En pratique, l'invention ayant pour objet un système de raccordement d'un tuyau véhiculant un fluide chaud, on choisit toutefois pour ces éléments des matériaux aptes à résister à la température du fluide circulant dans le tuyau, à la fois sur le plan mécanique et sur celui de la corrosion. Avantageusement, le tuyau et la cloche sont, en tout ou en partie, constitués d'au moins un métal. On peut utiliser aussi bien un seul métal qu'un alliage de deux ou plusieurs métaux. Comme métal, on retient de préférence l'acier inoxydable. Ce choix convient bien dans le cas de tuyaux EGR, qui doivent résister à des températures de plusieurs centaines de degrés et être le moins possible conducteurs de la chaleur. La cloche et le tuyau sont souvent constitués du même matériau, bien que cela ne soit pas une obligation. La cloche est fixée à l'extrémité du tuyau insérée dans l'orifice, par exemple par soudage ou par brasage, de façon telle que sa partie la plus large soit dirigée vers l'extrémité du tuyau ou vers le côté opposé.
De préférence, la cloche est fixée de façon telle que sa partie la plus large soit dirigée vers le côte opposé à l'extrémité du tuyau insérée dans l'orifice. Afin qu'elle remplisse au mieux son rôle de bouclier thermique, cette cloche a de préférence une hauteur (mesurée parallèlement à l'axe de l'orifice) au moins égale à la profondeur de l'orifice (4), c'est-à-dire à l'épaisseur de la paroi de l'organe (2) au droit de l'orifice (4).

Souvent, le tuyau est cylindrique, de même que l'orifice auquel il doit être raccordé, et toutes les pièces ou parties de pièces telles que la cloche, le joint annulaire, le ressaut interne de l'orifice, etc., sont de révolution. Ceci n'exclut pas que l'invention puisse également s'appliquer à des tuyaux dont la section n'est pas circulaire, mais par exemple ovale ou rectangulaire ; dans de tels cas, toutes les autres pièces ou parties de pièces doivent naturellement être adaptées en conséquence.

Selon une variante particulière de réalisation, représentée à la figure 2, l'orifice (4) est prolongé par un court tronçon de tuyauterie (12), faisant généralement partie intégrante de l'organe (2) ; une telle variante peut être utile dans certains cas particuliers, par exemple s'il en résulte une meilleure accessibilité du système de raccordement. Un autre avantage d'une telle variante, particulièrement intéressant dans les cas où le fluide chaud véhiculé par le tuyau a une température très élevée, est qu'elle permet d'utiliser une cloche plus haute, dont l'extrémité la plus large est dès lors portée à une température moins élevée, grâce à l'augmentation du refroidissement par sa surface latérale. Dans un tel cas, la cloche a de préférence une hauteur au moins égale à la profondeur totale de l'orifice (4), c'est-à-dire incluant la longueur du tronçon de tuyauterie (12). Dans la présente description, le terme d'orifice est utilisé au sens large, comme désignant à la fois l'orifice proprement dit et l'intérieur de l'éventuel court tronçon de tuyauterie qui le prolonge.

Avantageusement, l'extrémité commune du tuyau et de la cloche dépasse sensiblement le niveau de la paroi de l'organe (2), à l'intérieur de ce dernier, pour autant que l'écoulement des fluides y circulant ne soit pas perturbé de manière excessive. Une telle situation est avantageuse dans la mesure où elle permet au fluide de température modérée circulant dans l'organe (2) de mieux refroidir l'extrémité de la cloche et du tuyau, et d'ainsi réduire le transfert de chaleur du tuyau vers la cloche et, partant, vers l'organe (2).

L'organe (2) visé dans le cadre de la présente invention, contenant ou véhiculant un fluide de température modérée, peut être constitué d'une matière plastique quelconque, ou encore d'un mélange de deux ou plusieurs matières plastiques différentes. Par matières plastiques, on entend désigner aussi bien les matières plastiques thermoplastiques que thermodurcissables. Les matières thermoplastiques sont toutefois préférées. L'une ou plusieurs de ces matières plastiques peut éventuellement contenir un ou plusieurs additifs connus tels que pigments, stabilisants, adjuvants de mise en oeuvre, fibres de renforcement ou charges minérales. Dans le cas particulier de collecteurs d'admission de moteurs à combustion interne, on utilise généralement des matières plastiques présentant de bonnes propriétés thermo-mécaniques, par exemple à base de polyamides ou de polysulfure de phénylène. Ces exemples de matériaux ne sont toutefois pas limitatifs.

L'orifice (4) pratiqué dans la paroi de l'organe (2) et la cloche (3) ont de préférence des formes et des dimensions en rapport, qui permettent notamment l'insertion de la cloche dans l'orifice. A titre d'exemples, la cloche (3) et l'orifice (4) peuvent avoir une forme cylindrique, comme illustré à la fig. 1a, ou conique, comme illustré à la fig. 2.

Lors du raccordement, il est nécessaire de limiter l'enfoncement de la cloche à l'intérieur de l'organe (2). A cette fin, conformément à l'invention, on aménage dans l'orifice (4) un ressaut interne (5), de telle façon que le diamètre dudit orifice soit plus élevé du côté extérieur que vers l'intérieur de l'organe (2), et on munit l'extrémité la plus large de la cloche (3) d'un rebord externe (7). Le ressaut interne (5) se présente généralement comme une surface annulaire, substantiellement plane et perpendiculaire à l'axe de l'orifice (4), en regard de laquelle peut être amené le rebord externe (7) de la cloche (3), lui aussi substantiellement plane et perpendiculaire à l'axe de l'orifice (4). Ces deux surfaces annulaires n'entrent cependant pas directement en contact, mais sont séparées par un joint annulaire (6) y prenant appui.

Ce joint annulaire est généralement constitué d'un matériau élastique ayant une résistance suffisante à la température, par exemple d'un élastomère fluoré. Le rôle de ce joint annulaire est d'assurer radialement l'étanchéité entre la cloche (3) et l'organe (2) en matière plastique. Il convient donc que son diamètre intérieur soit légèrement inférieur au diamètre extérieur de la cloche juste au-dessous de son rebord externe (7) et que son diamètre extérieur soit légèrement supérieur au diamètre du premier tronçon de l'orifice (4), c'est-à-dire du tronçon de l'orifice s'étendant de son ressaut interne (5) vers l'extérieur de l'organe (2). Ainsi, l'étanchéité reste garantie même en cas de léger jeu axial entre le tuyau (1) muni de sa cloche (3) et l'organe (2). Une forme de joint annulaire courante et convenant particulièrement à cette fonction est le joint torique. Le joint annulaire peut toutefois être d'une section différente, par exemple ovale, rectangulaire ou autre.

Outre cette fonction d'étanchéité radiale, le joint annulaire (6) sert également d'appui axial au rebord externe (7) de la cloche ; il convient donc que le diamètre extérieur maximal du rebord externe (7) soit supérieur au diamètre du second tronçon de l'orifice, c'est-à-dire du tronçon de l'orifice qui suit, en direction de l'intérieur de l'organe (2), le premier tronçon tel que défini ci-dessus. Pour éviter que le rebord externe (7) n'entre en contact direct avec l'organe (2), ce qui pourrait poser des problèmes de résistance thermique pour son matériau constitutif, on préfère en outre que le diamètre extérieur maximal de ce rebord soit inférieur au diamètre du premier tronçon de l'orifice (4).

Une troisième fonction du joint annulaire (6) est de centrer la cloche (3) par rapport à l'orifice (4), c'est-à-dire d'empêcher tout contact entre la paroi latérale de la cloche et la paroi de l'orifice et, partant, d'éviter des problèmes de déformation ou de dégradation thermique de la paroi de l'organe (2).

Cet effet de centrage peut encore être amélioré par la présence, sur au moins une partie de la paroi de l'orifice (4), de protubérances, ayant par exemple la forme de pointes ou de nervures parallèles à l'axe de l'orifice.

En vue d'immobiliser fermement la cloche (3) par rapport à l'organe (2), on utilise une ou plusieurs épingles (8) qui sont insérées dans la margelle (10) entourant au moins partiellement l'orifice (4). On entend désigner par le terme d'épingle une pièce allongée et de rigidité élevée, par exemple constituée d'un tronçon de fil métallique rigide. Bien qu'il ne soit nullement exclu de recourir à plusieurs épingles, une variante de réalisation courante consiste à utiliser une seule épingle.

On peut avantageusement donner à au moins l'une des épingles (8) la forme d'un U, l'écartement des deux branches de ce U étant de préférence inférieur au diamètre du rebord externe (7) de la cloche. En outre, la portion centrale d'au moins l'une des épingles utilisées est avantageusement déformée de manière à lui donner approximativement la forme d'un arc de cercle contenu dans un plan sensiblement parallèle au rebord externe (7) de la cloche, comme illustré par exemple à la figure 1b. Une telle forme permet d'augmenter la surface de contact entre l'épingle et le rebord externe (7) de la cloche. En outre, si l'épingle et la margelle (10) sont conçus de manière adéquate l'une par rapport à l'autre, une telle forme permet également de limiter, par effet de clipage, tout déplacement accidentel de l'épingle (8) perpendiculairement à l'axe de l'orifice.

Quel que soit le nombre des épingles utilisées, il convient de donner à chaque épingle une forme telle qu'elle soit suffisamment éloignée du tuyau (1) pour éviter un transfert de chaleur excessif du tuyau à l'épingle et, partant, de l'épingle à la margelle (10). Un échauffement excessif de la partie de la margelle sur laquelle l'épingle prend appui pourrait en effet notamment conduire à des problèmes de fluage ou de dégradation thermique de la matière plastique constitutive de la margelle.

On peut éventuellement donner à l'épingle (8) une forme très légèrement incurvée en son centre, comme représenté à la figure 2, de façon à ce qu'elle exerce essentiellement une poussée verticale sur le rebord externe (7) de la cloche en son centre, ou au centre de chacune de ses branches dans le cas d'une épingle en forme de U. Combinée à l'élasticité du joint annulaire (6), la légère flexibilité de l'épingle permet ainsi de compenser un éventuel jeu ou fluage axial.

La section de l'épingle (8) peut être quelconque, par exemple circulaire, rectangulaire ou ovale. Il est cependant souhaitable, en vue d'une répartition aussi homogène que possible de sa pression, que sa section présente deux côtés opposés substantiellement rectilignes, du moins aux endroits où l'épingle entre en contact avec d'autres éléments. On lui donne de préférence une section en forme de cercle aplati, de rectangle ou de profilé en I, qui résiste particulièrement bien à la flexion. De manière particulièrement préférée, l'épingle a une section substantiellement rectangulaire. En pratique, les dimensions moyennes de la section de l'épingle sont généralement de l'ordre du millimètre.

Dans le but d'immobiliser axialement l'épingle (8), et donc indirectement la cloche et le tuyau, par rapport à l'organe (2), on prévoit dans la margelle (10) un ou plusieurs éléments de rétention sur lesquels l'épingle prend appui. Ces éléments de rétention consistent généralement en des découpes (9) dans lesquelles s'engage l'épingle. Selon une variante de réalisation, la margelle (10) est continue. Son rôle étant uniquement d'offrir un appui axial à l'épingle (8) là où celle-ci la traverse, on peut toutefois se contenter de ne prévoir des portions de margelle qu'aux endroits de passage de l'épingle, comme illustré sur les figures 1a et 1b. Le terme de margelle s'entend dès lors au sens large, comme désignant aussi bien une margelle continue s'étendant sur 360° qu'une ou plusieurs portions de margelle ne s'étendant que sur une fraction de la périphérie de l'orifice (4). Lorsque l'orifice (4) est prolongé par un court tronçon de tuyauterie (12), comme illustré à la figure 2, la margelle prolonge simplement ce tronçon de tuyauterie vers l'extérieur de l'organe (2). Qu'un tel tronçon de tuyauterie soit présent ou non, la margelle (10) comporte avantageusement, au moins sur une portion de sa périphérie, un rebord externe (11), contenu dans un plan perpendiculaire à l'axe de l'orifice (4).

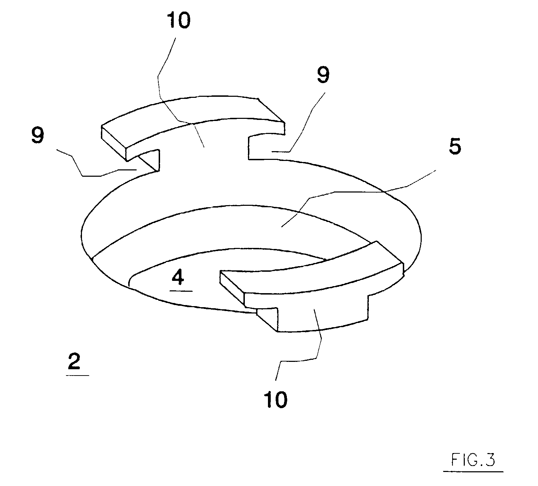

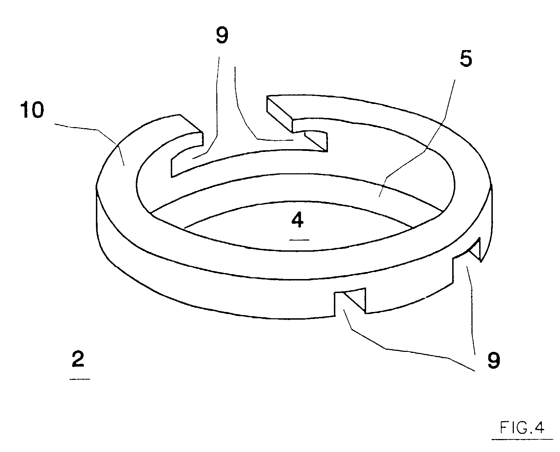

Les découpes (9) pratiquées dans la margelle (10), par lesquelles passent les extrémités de l'épingle (8), peuvent être des orifices traversant ou non la margelle selon des axes contenus dans un plan perpendiculaire à l'axe de l'orifice (4), comme illustré par exemple aux figures 1a, 1b et 2. Ces découpes peuvent également être ouvertes sur leur côté, et délimitées, comme illustré à la figure 3, par des rebords prolongeant latéralement le sommet de portions de margelle. Cette variante de réalisation est particulièrement avantageuse en ce qui concerne la fabrication de l'organe (2), aucune étape de perçage n'étant nécessaire. Ces deux types de découpes peuvent éventuellement être combinés, comme illustré à la figure 4.

Quel que soit le ou les types de découpes choisis, leur position, leur forme et leurs dimensions doivent évidemment être telles qu'elles permettent l'insertion de l'épingle, et qu'une fois l'épingle (8) en place, celle-ci exerce sur le rebord externe (7) de la cloche, sous l'effet de l'élasticité du joint annulaire (6), une pression suffisante pour immobiliser axialement la cloche (3) par rapport à l'organe (2).

En particulier, les côtés inférieurs de ces découpes (c'est-à-dire les côtés les plus proches de l'extrémité du tuyau) sont généralement tous situés dans un même plan perpendiculaire à l'axe de l'orifice (4), de même que leurs côtés supérieurs, de sorte que l'épingle adopte une position parallèle au rebord externe (7) de la cloche une fois qu'elle est glissée dans les découpes (9).

Lorsque la margelle comporte un rebord externe (11), la face inférieure de celui-ci se trouve avantageusement au niveau des côtés supérieurs des découpes (9), ce qui permet d'augmenter la surface de contact entre l'épingle et la margelle.

La présence d'un tel rebord (11) de la margelle présente plusieurs avantages : ainsi, il peut notamment protéger l'épingle d'éventuelles salissures, et réduire le risque qu'elle ne soit accidentellement déplacée lors d'une intervention sur un organe voisin. Si le rebord est adéquatement conformé et dimensionné, il peut encore servir à vérifier visuellement le bon positionnement de l'épingle, par exemple si celle-ci n'est totalement cachée qu'une fois complètement en place.

En outre, la longueur du premier tronçon de l'orifice est telle qu'une fois que le joint annulaire (6) est disposé en contact avec le ressaut interne (5), et que la cloche (3) est insérée dans l'orifice (4) et mise en contact avec ce joint annulaire, le bord supérieur du rebord externe (7) de la cloche (c'est-à-dire sa face la plus éloignée de l'extrémité du tuyau insérée dans l'orifice) dépasse (axialement et vers l'extérieur de l'organe (2)) le niveau des côtés inférieurs des découpes et arrive à une distance du niveau des côtés supérieurs des découpes (9) pratiquées dans la margelle inférieure à l'épaisseur de l'épingle (8), sans quoi celle-ci ne pourrait exercer aucune pression sur le rebord externe de la cloche. De même, il est souhaitable qu'aucun effort excessif ne soit nécessaire en vue d'amener le bord supérieur du rebord externe (7) de la cloche suffisamment en-dessous (en direction de l'organe (2)) du côté supérieur des découpes (9) pour permettre l'insertion de l'épingle, afin que cette opération ne nécessite pas l'utilisation d'outils.

Dans les cas où l'on désire obtenir un système de raccordement d'une grande compacité, on aménage de préférence les découpes (9) de telle sorte que leurs côtés inférieurs soient contenus dans le plan de la paroi externe de l'organe (2), comme illustré aux figures 3 et 4, ce qui minimise l'encombrement axial du système.

La margelle (10) est avantageusement disposée au bord même de l'orifice (4), ce qui permet de réduire la longueur de l'épingle (8) et, partant, d'accroître sa rigidité.

Dans la mesure du possible, on conçoit la margelle de manière telle qu'elle puisse être façonnée lors de la fabrication de l'organe (2), qui se fait par des techniques connues de l'homme du métier, généralement par moulage par injection. Si la complexité de la pièce l'exige, il peut toutefois être avantageux que la margelle fasse partie d'un insert réalisé séparément, a partir d'une matière différente de celle dont est constituée la majeure partie de l'organe (2). On peut ainsi fabriquer, dans une première étape, par exemple par injection, une pièce comportant la margelle (10) et au moins une partie du contour de l'orifice (4), et alors utiliser, dans une seconde étape, cette pièce comme insert lors de la formation de l'organe (2). Cet insert doit résister thermiquement à la seconde étape de fabrication ; il est donc préférable de le réaliser à partir d'une matière présentant de meilleures propriétés thermo-mécaniques que celle constituant le reste de l'organe (2). On peut utiliser à cette fin une matière plastique ou métallique. L'utilisation d'une matière plastique est avantageuse sur le plan du recyclage. La matière plastique peut notamment être choisie parmi les polymères à base de polysulfure de phénylène ou les polyamides et peut éventuellement contenir des additifs connus tels que ceux mentionnés précédemment.
L'utilisation d'un tel insert est également avantageuse dans la perspective visée, car ce sont précisément les éléments adjacents à l'orifice (4) qui sont le plus sollicités sur le plan thermomécanique. A titre de variante particulière, cet insert comporte à la fois le contour de l'orifice (4), son ressaut interne (5), l'éventuel court tronçon de tuyauterie (12) qui prolonge l'orifice, et la margelle (10).

La mise en oeuvre du système de raccordement selon l'invention est particulièrement simple : il suffit d'insérer l'extrémité du tuyau muni de sa cloche (3) dans l'orifice (4), dont le ressaut interne (5) a été préalablement garni du joint annulaire (6), puis, en exerçant une légère pression axiale sur le tuyau, de glisser l'épingle (8) à travers les découpes (9) ménagées dans la margelle (10). En relâchant la pression axiale exercée sur le tuyau, le joint (6), sous l'effet de son élasticité, applique le rebord externe de la cloche (7) contre l'épingle (8), ainsi que cette dernière contre les côtés supérieurs des découpes (9) pratiquées dans la margelle (10), ce qui immobilise le tuyau et la cloche par rapport à l'organe (2). De même que le démontage, qui se résume à inverser ces étapes, cette procédure de montage ne nécessite aucun outillage particulier, ni la mise en oeuvre de forces importantes.

L'invention a également pour objet l'utilisation d'un système de raccordement tel que décrit ci-dessus pour raccorder, dans un moteur à combustion interne, un tuyau de recirculation des gaz d'échappement à un collecteur d'admission en matière plastique.

## Revendications

1. Système de raccordement étanche d'un tuyau (1) véhiculant un fluide chaud à un organe (2) en matière plastique, dans lequel le raccordement se fait par l'intermédiaire d'une cloche (3) externe fixée au tuyau, servant de bouclier thermique et insérée dans un orifice (4) pratiqué dans la paroi de l'organe (2), ledit orifice (4) comportant un ressaut interne (5) garni d'un joint annulaire (6) et la partie la plus large de la cloche (3) étant pourvue d'un rebord externe (7) prenant appui sur le joint annulaire (6), caractérisé en ce que l'orifice (4) est entouré, extérieurement et au moins partiellement, par une margelle (10), et le rebord externe (7) de la cloche est appliqué contre le joint annulaire (6) par au moins une épingle (8) insérée dans la margelle (10) entourant l'orifice (4).

2. Système de raccordement selon la revendication 1, dans lequel la cloche (3) est fixée à l'extrémité du tuyau insérée dans l'orifice de façon telle que sa partie la plus large soit dirigée vers le côté opposé à cette extrémité du tuyau.

3. Système de raccordement selon l'une des revendications précédentes, dans lequel le tuyau (1) et la cloche (3) sont, en tout ou en partie, constitués d'au moins un métal.

4. Système de raccordement selon l'une des revendications précédentes, dans lequel l'extrémité commune du tuyau et de la cloche dépasse sensiblement le niveau de la paroi de l'organe (2), à l'intérieur de ce dernier.

5. Système de raccordement selon l'une des revendications précédentes, dans lequel au moins l'une des épingles (8) a la forme d'un U.

6. Système de raccordement selon la revendication 5, dans lequel la portion centrale d'au moins une épingle est déformée de manière à lui donner approximativement la forme d'un arc de cercle.

7. Système de raccordement selon l'une des revendications précédentes, dans lequel l'épingle a une section substantiellement rectangulaire.

8. Système de raccordement selon l'une des revendications précédentes, dans lequel la margelle (10) comporte, au moins sur une portion de sa périphérie, un rebord externe (11) contenu dans un plan perpendiculaire à l'axe de l'orifice (4).

9. Système de raccordement selon l'une des revendications précédentes, dans lequel la margelle (10) fait partie d'un insert réalisé séparément, à partir d'une matière différente de celle dont est constituée la majeure partie de l'organe (2).

10. Utilisation d'un système de raccordement selon l'une des revendications précédentes pour raccorder, dans un moteur à combustion interne, un tuyau de recirculation des gaz d'échappement à un collecteur d'admission en matière plastique.

## Patentansprüche

1. System zum dichten Verbinden eines Rohrs (1), das ein heißes Fluid zu einem Bauteil (2) aus Kunststoff transportiert, bei welchem die Verbindung mit Hilfe einer am Rohr befestigten äußeren Glocke (3) zustande kommt, die als Wärmeschutz dient und in eine in die Wand des Bauteils (2) eingebrachte Öffnung (4) eingesetzt ist, wobei die besagte Öffnung (4) einen mit einer ringförmigen Dichtung (6) ausgestatteten inneren Vorsprung (5) aufweist, und der weiteste Teil der Glocke (3) mit einem äußeren Kragen (7) versehen ist, der sich auf der ringförmigen Dichtung (6) abstützt, dadurch gekennzeichnet, daß die Öffnung (4) außen und mindestens teilweise von einer Einfassung (10) umgeben ist, und der äußere Kragen (7) der Glocke von mindestens einer in die die Öffnung (4) umgebende Einfassung (10) eingeführten Nadel (8) gegen die ringförmige Dichtung (6) gedrückt wird.

2. Verbindungssystem nach Anspruch 1, bei welchem die Glocke (3) am Ende des in die Öffnung eingeführten Rohrs befestigt ist, so daß ihr weitester Teil zu der zu diesem Ende des Rohrs entgegengesetzten Seite hin gerichtet ist.

3. Verbindungssystem nach einem der vorangehenden Ansprüche, bei welchem das Rohr (1) und die Glocke (3) ganz oder teilweise aus mindestens einem Metall bestehen.

4. Verbindungssystem nach einem der vorangehenden Ansprüche, bei welchem das gemeinsame Ende des Rohrs und der Glocke wahrnehmbar über das Niveau der Wand des Bauteils (2) im Inneren dieses letzteren hinausreicht.

5. Verbindungssystem nach einem der vorangehenden Ansprüche, bei welchem mindestens eine der Nadeln (8) die Form eines U aufweist.

6. Verbindungssystem nach Anspruch 5, bei welchem der mittlere Teil mindestens einer Nadel verformt ist, um ihm ungefähr die Form eines Kreisbogens zu geben.

7. Verbindungssystem nach einem der vorangehenden Ansprüche, bei welchem die Nadel einen im wesentlichen rechteckigen Querschnitt aufweist.

8. Verbindungssystem nach einem der vorangehenden Ansprüche, bei welchem die Einfassung (10) mindestens auf einem Teil ihres Umfangs einen äußeren Kragen (11) aufweist, der in einer zur Achse der Öffnung (4) senkrechten Ebene enthalten ist.

9. Verbindungssystem nach einem der vorangehenden Ansprüche, bei welchem die Einfassung (10) Teil eines getrennt ausgebildeten Einsatzes aus einem Material ist, das sich von demjenigen, aus dem der größte Teil des Bauteils (2) besteht, unterscheidet.

10. Verwendung eines Verbindungssystems nach einem der vorangehenden Ansprüche zum Verbinden eines Abgasrückführrohrs mit einem Ansaugsammelrohr aus Kunststoff bei einem Verbrennungsmotor.

## Claims

1. Sealed connection system for connecting a pipe (1) carrying a hot fluid to a plastic member (2), in which the connection is achieved via an external bell (3) fixed to the pipe, serving as a heat shield and inserted into an orifice (4) made in the wall of the member (2), said orifice (4) comprising an internal projection (5) lined with an annular seal (6) and the widest part of the bell (3) being provided with an external flange (7) bearing on the annular seal (6); characterized in that the orifice (4) is surrounded, on the outside, at least partially, by a lip (10), and the external flange (7) of the bell is applied against the annular seal (6) by at least one pin (8) inserted into the lip (10) surrounding the orifice (4).

2. Connection system according to Claim 1, in which the bell (3) is fixed at that end of the pipe inserted into the orifice in such a way that its widest part is facing towards the opposite side from this end of the pipe.

3. Connection system according to one of the preceding claims, in which the pipe (1) and the bell (3) are, in whole or in part, formed by at least one metal.

4. Connection system according to one of the preceding claims, in which the common end of the pipe and of the bell extends substantially beyond the level of the wall of the member (2), inside the latter.

5. Connection system according to one of the preceding claims, in which at least one of the pins (8) is in the shape of a U.

6. Connection system according to Claim 5, in which the central portion of at least one pin is deformed so as to give it approximately the shape of an arc of a circle.

7. Connection system according to one of the preceding claims, in which the pin has a substantially rectangular cross-section.

8. Connection system according to one of the preceding claims, in which the lip (10) comprises, at least over a portion of its periphery, an external flange (11) contained in a plane perpendicular to the axis of the orifice (4).

9. Connection system according to one of the preceding claims, in which the lip (10) forms part of an insert produced separately, using a substance different from that from which the major part of the member (2) is formed.

10. Use of a connection system according to one ofthe preceding claims in order to connect, in an internal combustion engine, an exhaust gas recirculation pipe to a plastic inlet manifold.
